# EUROPEAN PATENT SPECIFICATION

(11) **EP 3 760 669 B1**
(45) Date of publication and mention of the grant of the patent: **29.06.2022**
(21) Application number: 19757141.7
(22) Date of filing: 06.02.2019
(51) Int. Cl.: C08L 9/00, B60C 1/00, C08K 3/36, C08K 5/103, C08L 9/06, C08K 5/548

(54) **RUBBER COMPOSITION AND PNEUMATIC TIRE OBTAINED USING SAME**
KAUTSCHUKZUSAMMENSETZUNG UND DAMIT HERGESTELLTER LUFTREIFEN
COMPOSITION DE CAOUTCHOUC ET PNEUMATIQUE OBTENU À L'AIDE DE CELLE-CI

(30) Priority: 26.02.2018 JP 2018031516; 24.10.2018 JP 2018199694
(43) Date of publication of application: 06.01.2021
(73) Proprietor: The Yokohama Rubber Co., Ltd., Tokyo 105-8685 (JP)
(72) Inventor: MIHARA, Satoshi, Hiratsuka-shi, Kanagawa 254-8601 (JP)
(74) Representative: Dilg, Haeusler, Schindelmann Patentanwaltsgesellschaft mbH
(86) International application number: PCT/JP2019/004289
(87) International publication number: WO 2019/163519

(56) References cited:
- EP-A1- 2 937 384
- EP-A1- 3 266 821
- JP-A- 2017 206 645
- JP-A- 2018 039 912
- JP-A- 2018 127 520

## Description

### Technical Field

The present invention relates to a rubber composition and a pneumatic tire using the rubber composition and particularly relates to a rubber composition that can enhance dispersibility of silica having a high specific surface area even when such silica is blended and that can simultaneously enhance rolling resistance, wet grip performance, and wear resistance and a pneumatic tire using the rubber composition.

### Background Art

Three performances, including rolling resistance, wet grip performance (grip performance on a road surface that is wet), and wear resistance, are called a magic triangle, and to achieve high performances of a tire, this magic triangle performance needs to be well-balanced to a high degree. However, simultaneously enhancing these three performances has been recognized as being considerably difficult in the industry. For example, the wet grip performance and the wear resistance are mutually incompatible performances.

Meanwhile, as demands for achieving high performances of a tire have been further increased in recent years, technologies of blending silica having a high specific surface area have been known. Such silica can enhance wear resistance but has a problem in that dispersion in rubber is significantly difficult. In the industry, attempts have been made to develop various silane couplings to disperse silica, but suitable dispersion of the silica having a high specific surface area in rubber has not been achieved yet.

Patent Document 1 below describes an additive composition for a silica-containing rubber composition containing a glycerin fatty acid ester, wherein the glycerin fatty acid ester is an ester of glycerin and two or more fatty acids, a fatty acid component in a greatest amount among the two or more fatty acids constituting the glycerin fatty acid ester is from 10 to 90 mass% of all fatty acids, and from 50 to 100 mass% of a monoester component is contained in the glycerin fatty acid ester. Furthermore, Patent Document 2 below describes a rubber composition for a sidewall or a base tread, the rubber composition containing a rubber component containing two or more types of diene rubber; and a glycerol fatty acid triester derived from a resource except petroleum, wherein the rubber component contains at least one type of diene rubber selected from the group consisting of natural rubber, epoxidized natural rubber, and butadiene rubber, the glycerol fatty acid triester has a content of oleic acid of 45 mass% or greater, and the total content of the natural rubber and the butadiene rubber in 100 mass% of the rubber component is 50 mass% or greater or the total content of the natural rubber and the epoxidized natural rubber in 100 mass% of the rubber component is 50 mass% or greater. Furthermore, Patent Document 3 describes a rubber composition containing diene rubber, silica, a silane coupling agent, and a particular glycerin ester compound, wherein a melting point of the ester compound is 40°C or lower, a content of the silica is from 5 to 200 parts by mass per 100 parts by mass of the diene rubber, a content of the silane coupling agent is from 1 to 20 mass% relative to the content of the silica, and a content of the ester compound is from 1 to 20 mass% relative to the content of the silica. However, technologies described in Patent Documents 1 to 3 do not well-balance the magic triangle performance to a high degree yet, that is, the three performances including rolling resistance, wet grip performance, and wear resistance.

### Citation List

### Patent Literature

Patent Document 1: WO 2016/139916
Patent Document 2: JP 5679798 B
Patent Document 3: JP 2016-37556 A

### Summary of Invention

### Technical Problem

An object of the present invention is to provide a rubber composition that can enhance dispersibility of silica having a high specific surface area even when such silica is blended and that can simultaneously enhance rolling resistance, wet grip performance, and wear resistance and to provide a pneumatic tire using the rubber composition.

### Solution to Problem

As a result of diligent research, the inventor of the present invention found that the problems described above can be solved by blending, to diene rubber, particular amounts of silica and a silane coupling agent and a particular amount of a particular polyglycerin fatty acid ester, and thus completed the present invention.

The present invention is described below.

1. A rubber composition containing: per 100 parts by mass of diene rubber, from 5 to 200 parts by mass of silica, from 1 to 20 mass% of a silane coupling agent relative to the mass of the silica, and from 1 to 20 mass% of a polyglycerin fatty acid ester derived from a fatty acid having from 6 to 24 carbons relative to the mass of the silica,
the polyglycerin fatty acid ester being represented by Formula (1) below.

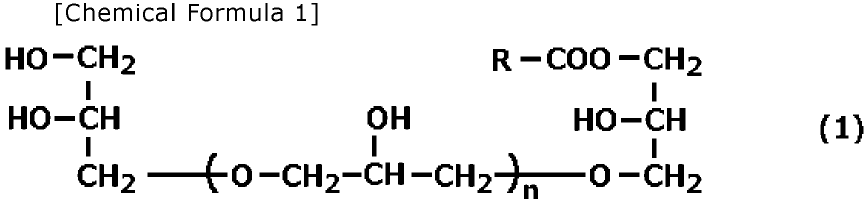

In Formula (1), R represents a carbon chain derived from the fatty acid, and n represents from 0 to 8.
2. The rubber composition according to 1 above, where a CTAB specific surface area of the silica is 150 m²/g or greater.
3. The rubber composition according to 2 above, where a CTAB specific surface area of the silica is 180 m²/g or greater.
4. The rubber composition according to 1 above, where the fatty acid is stearic acid, oleic acid, linoleic acid, or linolenic acid.
5. The rubber composition according to 1 above, where n is 0 or 1 in Formula (1).
6. The rubber composition according to 5 above, where n is 0 in Formula (1).
7. A pneumatic tire comprising the rubber composition according to 1 above in a tread.

### Advantageous Effects of Invention

According to an embodiment of the present invention, since particular amounts of silica and a silane coupling agent are blended in diene rubber and a particular amount of a particular polyglycerin fatty acid ester is further blended, even when a large amount of silica having a high specific surface area is blended, a rubber composition that can enhance dispersibility of the silica and that can simultaneously enhance rolling resistance, wet grip performance, and wear resistance; and a pneumatic tire using the rubber composition can be provided.

### Description of Embodiments

The present invention will be described in further detail below.

### Diene rubber

Any diene rubber that can be compounded in ordinary rubber compositions may be used as the diene rubber used in an embodiment of the present invention. Examples thereof include natural rubber (NR), isoprene rubber (IR), butadiene rubber (BR), styrene-butadiene copolymer rubber (SBR), and acrylonitrile-butadiene copolymer rubber (NBR). These may be used alone, or two or more may be used in combination. Furthermore, the molecular weight and the microstructure thereof is not particularly limited. The diene rubber may be terminally modified with an amine, amide, silyl, alkoxysilyl, carboxyl, or hydroxyl group or may be epoxidized.

Among these diene rubbers, from a perspective of effectiveness of an embodiment of the present invention, SBR or BR is preferably compounded as the diene rubber.

### Silica

The silica used in an embodiment of the present invention preferably has a CTAB specific surface area of 150 m²/g or greater. In an embodiment of the present invention, even when such silica having a high specific surface area is blended in rubber, suitable dispersion can be performed. Note that, in an embodiment of the present invention, furthermore, even silica having a CTAB specific surface area of 180 m²/g or greater, and especially 200 m²/g or greater, which is an ultra-high specific surface area, can be suitably dispersed in rubber.

Note that the CTAB specific surface area of the silica is measured in accordance with ISO 5794/1.

### Silane coupling agent

The silane coupling agent used in an embodiment of the present invention is not particularly limited but is preferably a sulfur-containing silane coupling agent. Examples thereof include bis(3-triethoxysilylpropyl)tetrasulfide, bis(3-triethoxysilylpropyl)disulfide, 3-trimethoxysilylpropylbenzothiazole tetrasulfide, γ-mercaptopropyltriethoxysilane, and 3-octanoylthiopropyltriethoxysilane. One type or two or more types of the silane coupling agents may be used in combination.

### Polyglycerin fatty acid ester

The polyglycerin fatty acid ester used in an embodiment of the present invention is an ester derived from a fatty acid having from 6 to 24 carbons. Specific examples of the fatty acid include straight-chain fatty acids, such as caproic acid, enanthic acid, caprylic acid, pelargonic acid, capric acid, lauric acid, myristic acid, pentadecylic acid, palmitic acid, margaric acid, stearic acid, oleic acid, arachidic acid, behenic acid, and lignoceric acid. One type of the polyglycerin fatty acid ester may be used, or two or more types of the polyglycerin fatty acid esters may be used in combination. Note that, from the perspective of further enhancing rolling resistance, wet grip performance, and wear resistance simultaneously, the fatty acid is preferably stearic acid, oleic acid, linoleic acid, or linolenic acid.

In the polyglycerin fatty acid ester used in an embodiment of the present invention, while an -OH group derived from glycerin adsorbs to a silanol group of a silica surface, a repeating unit of glycerin tends to enter and remain in a pore of an aggregate of silica having a high specific surface area, and thus this contributes to dispersibility of silica in the rubber. In this way, rolling resistance, wet grip performance, and wear resistance can be simultaneously enhanced. Note that the effect is not an effect achieved by the monoglycerin fatty acid ester.

Note that, from the perspective of further enhancing rolling resistance, wet grip performance, and wear resistance simultaneously, the polyglycerin fatty acid ester used in an embodiment of the present invention is preferably a monofatty acid ester represented by Formula (1) below.

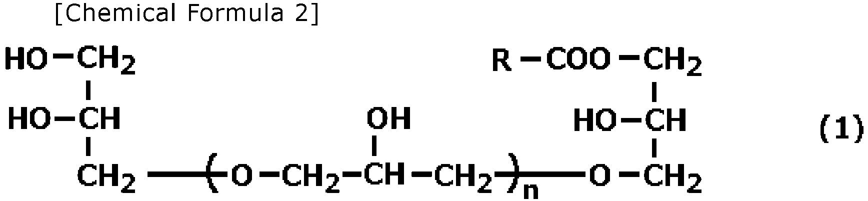

In Formula (1), R represents a carbon chain derived from the fatty acid, and n represents from 0 to 8, preferably from 0 to 3, and particularly preferably 0 or 1.

Note that, in the rubber composition described in Patent Document 3 described above, a glycerin ester compound obtained by selectively subjecting a secondary hydroxy group of polyglycerin to esterification is used. However, even when such a glycerin ester compound described in Patent Document 3 is used in place of the monofatty acid ester represented by Formula (1) according to an embodiment of the present invention, the effects described above cannot be achieved, and dispersibility of silica having a high specific surface area, rolling resistance, wet grip performance, and wear resistance cannot be enhanced simultaneously, which are the effects of an embodiment of the present invention.

The polyglycerin fatty acid ester used in an embodiment of the present invention may be a commercially available product, and examples of the monofatty acid ester represented by Formula (1) include DS100A (diglycerin monostearate), DO100V (diglycerin monooleate), S71D (diglycerin stearate), POEM J-4081V (tetraglycerin stearate), J-0021 (decaglycerin laurate), J-0081HV (decaglycerin stearate), and J-0381V(decaglycerin oleate), available from Riken Vitamin Co., Ltd.

### Compounding ratio of rubber composition

The rubber composition according to an embodiment of the present invention blends, per 100 parts by mass of diene rubber, from 5 to 200 parts by mass of silica, from 1 to 20 mass% of a silane coupling agent relative to the mass of the silica, and from 1 to 20 mass% of a polyglycerin fatty acid ester derived from a fatty acid having from 6 to 24 carbons relative to the mass of the silica.

When the blended amount of the silica is less than 5 parts by mass, the effects of an embodiment of the present invention cannot be achieved because the blended amount is too small. On the other hand, when the blended amount is greater than 200 parts by mass, dispersibility of silica and rolling resistance are deteriorated.

When the blended amount of the silane coupling agent is less than 1 mass% relative to the mass of the silica, the effects of an embodiment of the present invention cannot be achieved because the blended amount is too small. On the other hand, when the blended amount is greater than 20 mass%, processability and elongation at break are deteriorated.

When the blended amount of the polyglycerin fatty acid ester is less than 1 mass% relative to the mass of the silica, the effects of an embodiment of the present invention cannot be achieved because the blended amount is too small. On the other hand, when the blended amount is greater than 20 mass%, wear resistance is deteriorated.

Furthermore, in the rubber composition of an embodiment of the present invention, the blended amount of the silica is preferably from 30 to 200 parts by mass per 100 parts by mass of the diene rubber.

The blended amount of the silane coupling agent is preferably from 3 to 20 mass% relative to the mass of the silica.

The blended amount of the polyglycerin fatty acid ester is preferably from 2 to 20 mass% relative to the mass of the silica.

### Other components

The rubber composition in the present invention may contain, in addition to the components described above, vulcanizing or crosslinking agents; vulcanizing or crosslinking accelerators; various fillers, such as zinc oxide, carbon black, clay, talc, and calcium carbonate; anti-aging agents; plasticizers; and other various additives commonly blended in rubber compositions. The additives are kneaded by a common method to obtain a composition that can then be used for vulcanization or crosslinking. Blended amounts of these additives may be any standard blended amount in the related art, so long as the object of the present technology is not hindered.

Furthermore, the rubber composition according to an embodiment of the present invention is suitable for producing a pneumatic tire according to a known method of producing pneumatic tires and is particularly preferably used in a tread.

### Example

The present invention will be described in further detail by way of examples and comparative examples, but the present invention is not limited by these examples.

Standard Examples 1 to 3, Examples 1 to 11, and Comparative Examples 1 to 8

### Preparation of sample

For the composition (part by mass) shown in Tables 1 to 3, the components other than the vulcanization accelerators and sulfur were kneaded for 5 minutes in a 1.7 L sealed Banbury mixer. The rubber was then discharged outside of the mixer and cooled at room temperature. Thereafter, the rubber was placed in an identical mixer again, and the vulcanization accelerators and sulfur were then added to the mixture and further kneaded to obtain a rubber composition. Next, the rubber composition thus obtained was pressure vulcanized in a predetermined mold at 160°C for 20 minutes to obtain a vulcanized rubber test piece, and then the test methods shown below were used to measure the physical properties of the unvulcanized rubber composition and the vulcanized rubber test piece.

Payne effect (silica dispersibility): G' (0.56% strain) was measured using the unvulcanized composition and using RPA 2000 in accordance with ASTM P6204. The results are expressed as index values with the Standard Examples being assigned the values of 100. A smaller index value indicates higher dispersibility of a reinforcing filler.

tan δ (60°C) (rolling resistance): tan δ (60°C) was tested at 60°C in accordance with JIS K 6394. The results are expressed as index values with Standard Examples being assigned the index value of 100. A smaller index value indicates lower rolling resistance.

Wet grip performance: tan δ (0°C) was measured at an elongation deformation strain of 10 ± 2%, a vibration frequency of 20 Hz, and a temperature of 0°C, using a viscoelastic spectrometer (available from Toyo Seiki Seisaku-sho, Ltd.) in accordance with JIS K 6394:2007. The results are expressed as index values with the Standard Examples being assigned the values of 100. A larger index value indicates superior wet grip performance.

Wear resistance: A Lambourn abrasion resistance test machine, available from Iwamoto Seisakusho, was used to determine an amount of wear by measuring with a load of 5 kg (49 N) and a slip ratio of 25% for 4 minutes at room temperature. The results are expressed as index values with Standard Examples being assigned the index values of 100. A larger index value indicates superior wear resistance.

The results are shown in Tables 1 to 3.

**[Table 1-1]**

| | Standard Example 1 | Comparative Example 1 | Example 1 | Example 2 | Example 3 |
|---|---|---|---|---|---|
| SBR ^{∗}1 | 103.1 | 103.1 | 103.1 | 103.1 | 103.1 |
| BR ^{∗}2 | 25 | 25 | 25 | 25 | 25 |
| Silica-1 (CTAB: 200) ^{∗}3 | 100 | 100 | 100 | 100 | 100 |
| Silica-2 (CTAB: 115) ^{∗}4 | - | - | - | - | - |
| Monoglycerin monostearate S100 ^{∗}5 | - | 4 | - | - | - |
| Diglycerin monostearate DS100A ^{∗}6 | - | - | 4 | - | - |
| Diglycerin monooleate DO100V ^{∗}7 | - | - | - | 4 | - |
| Diglycerin stearate S71D ^{∗}8 | - | - | - | - | 4 |
| Silane coupling agent ^{∗}9 | 10 | 10 | 10 | 10 | 10 |
| Stearic acid ^{∗}10 | 2.5 | 2.5 | 2.5 | 2.5 | 2.5 |
| Zinc Oxide ^{∗}11 | 2.5 | 2.5 | 2.5 | 2.5 | 2.5 |
| Anti-aging agent ^{∗}12 | 1 | 1 | 1 | 1 | 1 |
| Process oil ^{∗}13 | 15 | 15 | 15 | 15 | 15 |
| Sulfur ^{∗}14 | 1.4 | 1.4 | 1.4 | 1.4 | 1.4 |
| Vulcanization accelerator CBZ ^{∗}15 | 1.7 | 1.7 | 1.7 | 1.7 | 1.7 |
| Vulcanization accelerator DPG ^{∗}16 | 1.5 | 1.5 | 1.5 | 1.5 | 1.5 |
| Silica dispersibility | 100 | 75 | 71 | 69 | 75 |
| Rolling resistance | 100 | 97 | 96 | 95 | 98 |
| Wet grip performance | 100 | 105 | 108 | 112 | 104 |
| Wear resistance | 100 | 92 | 114 | 113 | 110 |

**[Table 1-2]**

| | Comparative Example 2 | Comparative Example 3 | Example 4 | Example 5 | Example 6 | Example 7 |
|---|---|---|---|---|---|---|
| SBR ^{∗}1 | 103.1 | 103.1 | 103.1 | 103.1 | 103.1 | 103.1 |
| BR ^{∗}2 | 25 | 25 | 25 | 25 | 25 | 25 |
| Silica-1 (CTAB: 200) ^{∗}3 | 100 | 100 | 100 | 100 | 130 | 150 |
| Silica-2 (CTAB: 115) ^{∗}4 | - | - | - | - | - | - |
| Monoglycerin monostearate S100 ^{∗}5 | - | - | - | - | - | - |
| Diglycerin monostearate DS100A ^{∗}6 | 0.1 | 25 | 2 | 20 | 5.2 | 6.0 |
| Diglycerin monooleate DO100V ^{∗}7 | - | - | - | - | - | - |
| Diglycerin stearate S71D ^{∗}8 | - | - | - | - | - | - |
| Silane coupling agent ^{∗}9 | 10 | 10 | 10 | 10 | 10 | 10 |
| Stearic acid ^{∗}10 | 2.5 | 2.5 | 2.5 | 2.5 | 2.5 | 2.5 |
| Zinc Oxide ^{∗}11 | 2.5 | 2.5 | 2.5 | 2.5 | 2.5 | 2.5 |
| Anti-aging agent ^{∗}12 | 1 | 1 | 1 | 1 | 1 | 1 |
| Process oil ^{∗}13 | 15 | 15 | 15 | 15 | 35 | 50 |
| Sulfur ^{∗}14 | 1.4 | 1.4 | 1.4 | 1.4 | 1.4 | 1.4 |
| Vulcanization accelerator CBZ ^{∗}15 | 1.7 | 1.7 | 1.7 | 1.7 | 1.7 | 1.7 |
| Vulcanization accelerator DPG ^{∗}16 | 1.5 | 1.5 | 1.5 | 1.5 | 1.5 | 1.5 |
| Silica dispersibility | 100 | 65 | 92 | 67 | 87 | 92 |
| Rolling resistance | 100 | 98 | 98 | 97 | 99 | 100 |
| Wet grip performance | 100 | 102 | 97 | 100 | 113 | 117 |
| Wear resistance | 98 | 97 | 108 | 106 | 103 | 102 |

**Table 2**

| | Standard Example 2 | Comparative Example 4 | Example 8 | Example 9 |
|---|---|---|---|---|
| SBR ^{∗}1 | 103.1 | 103.1 | 103.1 | 103.1 |
| BR ^{∗}2 | 25 | 25 | 25 | 25 |
| Silica-1 (CTAB: 200) ^{∗}3 | - | - | - | - |
| Silica-2 (CTAB: 115) ^{∗}4 | 100 | 100 | 100 | 100 |
| Monoglycerin monostearate S100 ^{∗}5 | - | 4 | - | - |
| Diglycerin monostearate DS100A ^{∗}6 | - | - | 4 | - |
| Diglycerin monooleate DO100V ^{∗}7 | - | - | - | 4 |
| Diglycerin stearate S71D ^{∗}8 | - | - | - | - |
| Silane coupling agent ^{∗}9 | 10 | 10 | 10 | 10 |
| Stearic acid ^{∗}10 | 2.5 | 2.5 | 2.5 | 2.5 |
| Zinc Oxide ^{∗}11 | 2.5 | 2.5 | 2.5 | 2.5 |
| Anti-aging agent ^{∗}12 | 1 | 1 | 1 | 1 |
| Process oil ^{∗}13 | 15 | 15 | 15 | 15 |
| Sulfur ^{∗}14 | 1.4 | 1.4 | 1.4 | 1.4 |
| Vulcanization accelerator CBZ ^{∗}15 | 1.7 | 1.7 | 1.7 | 1.7 |
| Vulcanization accelerator DPG ^{∗}16 | 1.5 | 1.5 | 1.5 | 1.5 |
| Silica dispersibility | 100 | 92 | 86 | 84 |
| Rolling resistance | 100 | 101 | 98 | 98 |
| Wet grip performance | 100 | 98 | 108 | 106 |
| Wear resistance | 100 | 99 | 109 | 110 |

**[Table 3-1]**

| | Standard Example 3 | Comparative Example 5 | Example 10 | Example 11 | Comparative Example 6 |
|---|---|---|---|---|---|
| SBR ^{∗}1 | 103.1 | 103.1 | 103.1 | 103.1 | 103.1 |
| BR ^{∗}2 | 25 | 25 | 25 | 25 | 25 |
| Silica-1 (CTAB: 200) ^{∗}3 | - | - | - | - | - |
| Silica-2 (CTAB: 115) ^{∗}4 | - | - | - | - | - |
| Monoglycerin monostearate S100 ^{∗}5 | - | 4 | - | - | - |
| Diglycerin monostearate DS100A ^{∗}6 | - | - | 4 | - | - |
| Diglycerin monooleate DO100V ^{∗}7 | - | - | - | 4 | - |
| Diglycerin stearate S71D ^{∗}8 | - | - | - | - | - |
| Silane coupling agent ^{∗}9 | 10 | 10 | 10 | 10 | 10 |
| Stearic acid ^{∗}10 | 2.5 | 2.5 | 2.5 | 2.5 | 2.5 |
| Zinc Oxide ^{∗}11 | 2.5 | 2.5 | 2.5 | 2.5 | 2.5 |
| Anti-aging agent ^{∗}12 | 1 | 1 | 1 | 1 | 1 |
| Process oil ^{∗}13 | 15 | 15 | 15 | 15 | 15 |
| Sulfur ^{∗}14 | 1.4 | 1.4 | 1.4 | 1.4 | 1.4 |
| Vulcanization accelerator CBZ ^{∗}15 | 1.7 | 1.7 | 1.7 | 1.7 | 1.7 |
| Vulcanization accelerator DPG ^{∗}16 | 1.5 | 1.5 | 1.5 | 1.5 | 1.5 |
| Silica-3 ^{∗}17 | 100 | 100 | 100 | 100 | 100 |
| Diglycerin distearate ^{∗}18 | - | - | - | - | 4 |
| Silica dispersibility | 100 | 103 | 93 | 91 | 96 |
| Rolling resistance | 100 | 102 | 97 | 96 | 97 |
| Wet grip performance | 100 | 96 | 105 | 108 | 102 |
| Wear resistance | 100 | 97 | 109 | 112 | 96 |

**[Table 3-2]**

| | Standard Example 1 | Comparative Example 7 | Standard Example 2 | Comparative Example 8 |
|---|---|---|---|---|
| SBR ^{∗}1 | 103.1 | 103.1 | 103.1 | 103.1 |
| BR ^{∗}2 | 25 | 25 | 25 | 25 |
| Silica-1 (CTAB: 200) ^{∗}3 | 100 | 100 | - | - |
| Silica-2 (CTAB: 115) ^{∗}4 | - | - | 100 | 100 |
| Monoglycerin monostearate S100 ^{∗}5 | - | - | - | - |
| Diglycerin monostearate DS100A ^{∗}6 | - | - | - | - |
| Diglycerin monooleate DO100V ^{∗}7 | - | - | - | - |
| Diglycerin stearate S71D ^{∗}8 | - | - | - | - |
| Silane coupling agent ^{∗}9 | 10 | 10 | 10 | 10 |
| Stearic acid ^{∗}10 | 2.5 | 2.5 | 2.5 | 2.5 |
| Zinc Oxide ^{∗}11 | 2.5 | 2.5 | 2.5 | 2.5 |
| Anti-aging agent ^{∗}12 | 1 | 1 | 1 | 1 |
| Process oil ^{∗}13 | 15 | 15 | 15 | 15 |
| Sulfur ^{∗}14 | 1.4 | 1.4 | 1.4 | 1.4 |
| Vulcanization accelerator CBZ ^{∗}15 | 1.7 | 1.7 | 1.7 | 1.7 |
| Vulcanization accelerator DPG ^{∗}16 | 1.5 | 1.5 | 1.5 | 1.5 |
| Silica-3 ^{∗}17 | - | - | - | - |
| Diglycerin distearate ^{∗}18 | - | 4 | - | 4 |
| Silica dispersibility | 100 | 94 | 100 | 98 |
| Rolling resistance | 100 | 95 | 100 | 97 |
| Wet grip performance | 100 | 103 | 100 | 101 |
| Wear resistance | 100 | 98 | 100 | 94 |

^{∗}1: SBR (E-581, available from Asahi Kasei Corporation; oil extender content = 37.5 parts by mass per 100 parts by mass of SBR)
^{∗}2: BR (Nipol BR1220, available from Zeon Corporation)
^{∗}3: Silica-1 (Zeosil 200MP, available from Solvay; CTAB specific surface area = 200 m²/g)
^{∗}4: Silica-2 (Zeosil 115GR, available from Solvay; CTAB specific surface area = 115 m²/g)
^{∗}5: Monoglycerin monostearate (S100, available from Riken Vitamin Co., Ltd.)
^{∗}6: Diglycerin monostearate (DS100A, available from Riken Vitamin Co., Ltd.; n = 0 in Formula (1) above, and R-COO is derived from stearic acid)
^{∗}7: Diglycerin monooleate (DO100V, available from Riken Vitamin Co., Ltd.; n = 0 in Formula (1) above, and R-COO is derived from oleic acid)
^{∗}8: Diglycerin stearate (71D, available from Riken Vitamin Co., Ltd.; n = 0 in Formula (1) above, and R-COO is derived from stearic acid)
^{∗}9: Silane coupling agent (Si69, available from Evonik Degussa; bis(3-triethoxysilylpropyl)tetrasulfide)
^{∗}10: Stearic acid (Beads Stearic Acid YR, available from NOF Corporation)
^{∗}11: Zinc oxide (Zinc Oxide III, available from Seido Chemical Industry Co., Ltd.)
^{∗}12: Anti-aging agent (Santoflex 6PPD, available from Solutia Europe)
^{∗}13: Process oil (Extract No. 4S, available from Showa Shell Sekiyu K.K.)
^{∗}14: Sulfur (oil-treated sulfur, available from Karuizawa Refinery Ltd.)
^{∗}15: Vulcanization accelerator CBS (NOCCELER CZ-G, available from Ouchi Shinko Chemical Industrial Co., Ltd.)
^{∗}16: Vulcanization accelerator DPG (NOCCELER D, available from Ouchi Shinko Chemical Industrial Co., Ltd.)
^{∗}17: Silica-3 (KS30-SC, available from Tokuyama Corporation; CTAB specific surface area = 300 m²/g)
^{∗}18: Diglycerin distearate (an ester compound represented by Formula (A) below. Note that all of the two ORA groups are ester groups derived from stearic acid.

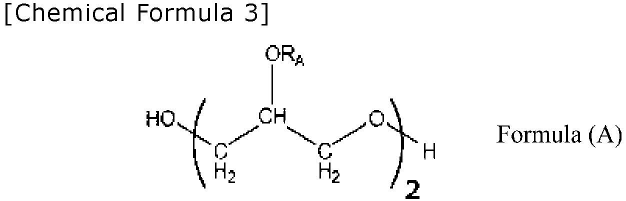

Table 1 shows examples in which silica having a high specific surface area was blended.

From the results in Table 1, it was clear that, since the rubber composition of each of Examples 1 to 7 blended the particular amounts of the silica and the silane coupling agent in the diene rubber and further blended the particular amount of the particular polyglycerin fatty acid ester, even when the silica having a high specific surface area was blended, the dispersibility of the silica was enhanced, and the rolling resistance, wet grip performance, and wear resistance were well-balanced to a high degree, compared to those of Standard Example 1.

On the other hand, since Comparative Example 1 was an example in which the monoglycerin monofatty acid ester was blended, wear resistance was deteriorated compared to that of Standard Example 1.

In Comparative Example 2, the blended amount of the polyglycerin fatty acid ester was less than the lower limit specified in an embodiment of the present invention, effects of improving the rolling resistance, wet grip performance, and wear resistance were not achieved compared to those of Standard Example 1.

In Comparative Example 3, the blended amount of the polyglycerin fatty acid ester was greater than the upper limit specified in an embodiment of the present invention, the wear resistance was deteriorated compared to that of Standard Example 1.

Table 2 shows examples in which silica having a low specific surface area was blended.

From the results in Table 2, it was clear that, since the rubber composition of each of Examples 8 and 9 blended the particular amounts of the silica and the silane coupling agent in the diene rubber and further blended the particular amount of the particular polyglycerin fatty acid ester, even when the silica was blended, the dispersibility of the silica was enhanced, and the rolling resistance, wet grip performance, and wear resistance were well-balanced to a high degree, compared to those of Standard Example 2.

On the other hand, since Comparative Example 4 was an example in which the monoglycerin monofatty acid ester was blended, the wet grip performance and wear resistance were deteriorated compared to those of Standard Example 2.

Table 3 shows examples in which silica having a ultra-high specific surface area was blended.

From the results in Table 3, it was clear that, since the rubber composition of each of Examples 10 and 11 blended the particular amounts of the silica and the silane coupling agent in the diene rubber and further blended the particular amount of the particular polyglycerin fatty acid ester, even when the silica having a ultra-high specific surface area was blended, the dispersibility of the silica was enhanced and the rolling resistance, wet grip performance, and wear resistance were well-balanced to a high degree, compared to those of Standard Example 3.

On the other hand, since Comparative Example 5 was an example in which the monoglycerin monofatty acid ester was blended, the wet grip performance and wear resistance were deteriorated compared to those of Standard Example 3.

Also, referring to the results in Tables 1 to 3, when the CTAB specific surface area of the silica in the composition according to an embodiment of the present invention is higher, the effects can be further enhanced. For example, when Example 1 and Example 8 are compared, each relative to the corresponding Standard Example, it was clear that the degree of improvement in the rolling resistance, wet grip performance, and wear resistance was enhanced further as the CTAB specific surface area of the silica was higher (Example 1).

Furthermore, as shown in Comparative Examples 6 to 8 in Table 3, in the case where a glycerin ester compound obtained by selectively subjecting a secondary hydroxy group of polyglycerin to esterification (compound described in Patent Document 3) was used, it was clear that the desired effects were not achieved. Note that, Comparative Example 6 was subjected to relative evaluation with respect to Standard Example 3 because the silica-3 was used. Comparative Example 7 was subjected to relative evaluation with respect to Standard Example 1 because the silica-1 was used. Comparative Example 8 was subjected to relative evaluation with respect to Standard Example 2 because the silica-2 was used.

## Claims

1. A rubber composition comprising:
per 100 parts by mass of diene rubber, from 5 to 200 parts by mass of silica, from 1 to 20 mass% of a silane coupling agent relative to the mass of the silica, and from 1 to 20 mass% of a polyglycerin fatty acid ester derived from a fatty acid having from 6 to 24 carbons relative to the mass of the silica,
the polyglycerin fatty acid ester being represented by Formula (1): 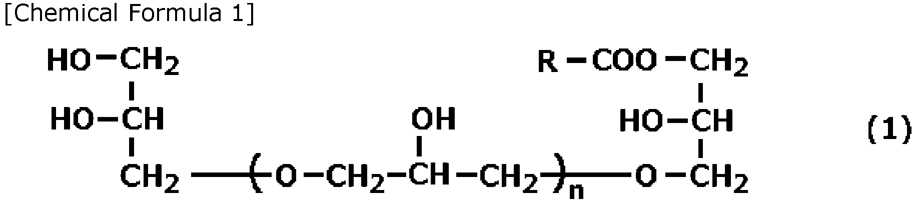
where R represents a carbon chain derived from the fatty acid, and n represents from 0 to 8.

2. The rubber composition according to claim 1, wherein
a CTAB specific surface area of the silica is 150 m2/g or greater.

3. The rubber composition according to claim 2, wherein
the CTAB specific surface area of the silica is 180 m²/g or greater.

4. The rubber composition according to claim 1, wherein
the fatty acid is stearic acid, oleic acid, linoleic acid, or linolenic acid.

5. The rubber composition according to claim 1, wherein
n is 0 or 1 in the Formula (1).

6. The rubber composition according to claim 5, wherein
n is 0 in the Formula (1).

7. A pneumatic tire comprising the rubber composition according to claim 1 in a tread.

## Patentansprüche

1. Kautschukzusammensetzung, umfassend:
pro 100 Massenteile Dienkautschuk 5 bis 200 Massenteile Silica, bezogen auf die Silica-Masse, zu 1 bis 20 Masse-% einen Silan-Haftvermittler, bezogen auf die Silica-Masse und zu 1 bis 20 Masse-% einen Polyglycerinfettsäureester, der von einer Fettsäure mit 6 bis 24 Kohlenstoffatomen abgeleitet ist, bezogen auf die Silica-Masse, wobei der Polyglycerinfettsäureester durch Formel (1) dargestellt ist: 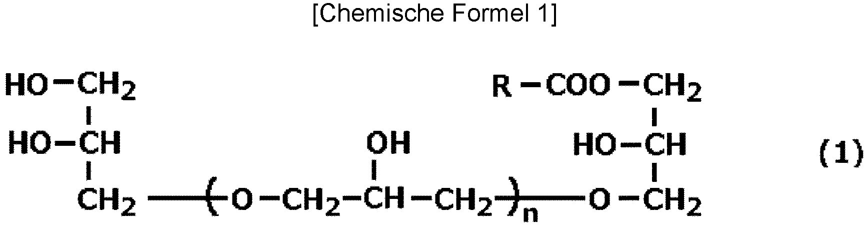 worin R für eine Kohlenstoffkette steht, die von der Fettsäure abgeleitet ist, und n für 0 bis 8 steht.

2. Kautschukzusammensetzung gemäß Anspruch 1, wobei eine spezifische CTAB-Oberfläche der Silica 150 m²/g oder mehr beträgt.

3. Kautschukzusammensetzung gemäß Anspruch 2, wobei die spezifische CTAB-Oberfläche der Silica 180 m²/g oder mehr beträgt.

4. Kautschukzusammensetzung gemäß Anspruch 1, wobei die Fettsäure Stearinsäure, Ölsäure, Linolsäure oder Linolensäure ist.

5. Kautschukzusammensetzung gemäß Anspruch 1, wobei n in der Formel (1) 0 oder 1 ist.

6. Kautschukzusammensetzung gemäß Anspruch 5, wobei n in der Formel (1) 0 ist.

7. Luftreifen, der die Kautschukzusammensetzung gemäß Anspruch 1 in einer Lauffläche verwendet.

## Revendications

1. Composition de caoutchouc comprenant : pour 100 parties en masse de caoutchouc diénique, de 5 à 200 parties en masse de silice, de 1 à 20 % en masse d'un agent de couplage silane par rapport à la masse de la silice, et de 1 à 20 % en masse d'un ester d'acide gras de polyglycérine dérivé d'un acide gras ayant de 6 à 24 carbones par rapport à la masse de la silice, l'ester d'acide gras de polyglycérine étant représenté par la Formule (1) : 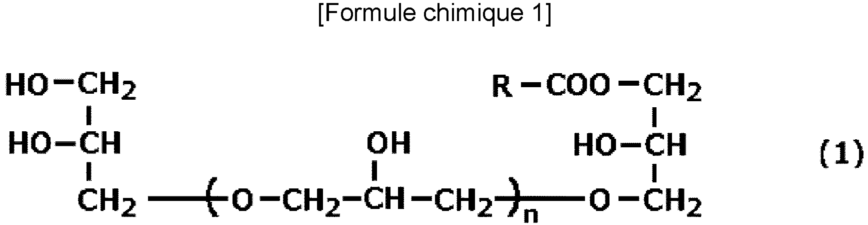 où R représente une chaîne carbonée dérivée de l'acide gras, et n représente de 0 à 8.

2. Composition de caoutchouc selon la revendication 1, dans laquelle
une surface spécifique CTAB de la silice est de 150 m2/g ou plus.

3. Composition de caoutchouc selon la revendication 2, dans laquelle
la surface spécifique CTAB de la silice est de 180 m²/g ou plus.

4. Composition de caoutchouc selon la revendication 1, dans laquelle
l'acide gras est de l'acide stéarique, de l'acide oléique, de l'acide linoléique, ou de l'acide linolénique.

5. Composition de caoutchouc selon la revendication 1, dans laquelle
n vaut 0 ou 1 dans la Formule (1).

6. Composition de caoutchouc selon la revendication 5, dans laquelle
n vaut 0 dans la Formule (1).

7. Pneumatique comprenant la composition de caoutchouc selon la revendication 1 dans une bande de roulement.
